# EUROPEAN PATENT APPLICATION

(11) **EP 4 733 016 A1**
(43) Date of publication of application: **29.04.2026**
(21) Application number: 25838920.4
(22) Date of filing: 19.08.2025
(51) Int. Cl.: B25J 19/00

(54) **MULTI-STAGE ADAPTIVE CONFORMAL PRESSING METHOD**

(30) Priority: 21.08.2024 CN 202411149209; 21.08.2024 CN 202411149709
(71) Applicant: Dalian University of Technology, Dalian, Liaoning 116024 (CN)
(72) Inventor: FU, Rao, Dalian, Liaoning 116024 (CN); WANG, Fuji, Dalian, Liaoning 116024 (CN); ZHAO, Liang, Dalian, Liaoning 116024 (CN); DU, Changlin, Dalian, Liaoning 116024 (CN); SHI, Xuepeng, Dalian, Liaoning 116024 (CN); WANG, Gongshuo, Dalian, Liaoning 116024 (CN); WANG, Qi, Dalian, Liaoning 116024 (CN); JIA, Zhenyuan, Dalian, Liaoning 116024 (CN)
(74) Representative: Murgitroyd & Company
(86) International application number: PCT/CN2025/115638
(87) International publication number: WO 2026/041007

(57) **Abstract**

The present invention belongs to the field of robotic automated drilling and riveting, and discloses a multi-stage adaptive conformal clamping method. In the method, a pressure foot can be pushed out with a small force through a drive and feedback module, thus ensuring that a conformal module can be in effective contact with a curved surface part to be machined; adaptive conformal processing at different points of the curved surface part is achieved through the conformal module; shaping locking is achieved through a locking module; a required clamping force is accurately applied through the drive and feedback module, thus completing first-stage conformal clamping; the contact state of conformal contact points is detected by a detection unit to judge whether multi-stage conformal processing is required; and if required, the locking module and the drive and feedback module will act synchronously to achieve deformation compensation during the first-stage conformal clamping, complete second-stage to multi-stage conformal clamping, and ensure the accuracy of conformal processing and the stability of clamping. The method of the present invention can achieve conformal clamping for different curved surface parts to effectively reduce the deformation amount of the parts, and can compensate for the deformation of the parts caused by clamping through multi-stage adaptive conformal clamping.

## Description

### Technical Field

The present invention belongs to the field of robotic automated drilling and riveting, and particularly relates to a multi-stage adaptive conformal clamping method which can achieve conformal clamping to reduce deformation according to the surface shape of a part.

### Background

With the increasing requirements for drilling accuracy of parts and components in the fields of aerospace, energy and power, boats and ships, and marine, traditional manual drilling has gradually failed to meet the drilling demands due to low efficiency and poor accuracy. With the rise of automation fields such as digital systems and industrial robots, the high-degree-of-freedom automated drilling technology featuring industrial robots carrying end effectors has developed rapidly. As an important component of a robotic automated drilling system, a pressure foot plays a role in clamping parts, enhancing drilling system stiffness, eliminating interlayer gaps, conducting normal detection, etc., and has become an important research field in automated drilling technology.

Certain research has been conducted both at home and abroad on pressure foot devices of robotic automated drilling systems, but research on part clamping methods is relatively less. Li Shujun have proposed a part clamping method driven by double-sided pneumatic cylinders and conducted calibration to clamping forces in the paper "Drilling End Effector Unit Design"; an RDS210 robotic automated drilling system developed by Shanghai Top Numerical Control Technology Co., Ltd. features a highly integrated design of a pressure foot unit to integrate normal measurement with a pressure foot, and adopts a flexible rubber pressure head to increase the frictional resistance of a cutting plane after clamping; and in the paper "ONe-sided Cell End effector Robotic Drilling System", an end effector of a ONCE robotic automated drilling system jointly developed by American Electroimpact and Airbus integrates a clamping unit at the front end, and uses a pressure foot to apply a clamping force to a part to avoid vibration during machining. All the pressure foot devices mentioned above have rigid planar structures, and the clamping modes are more suitable for planar or small curvature parts. However, for large curvature parts, especially thin-walled parts, a planar pressure foot will cause significant deformation of a part after clamping, resulting in a decrease in the hole diameter accuracy after drilling and making it difficult to meet the drilling requirements. How to achieve adaptive conformal clamping according to the surface characteristics of a curved surface part to be machined, increase the actual contact area, reduce the deformation of the part, and ensure the stability of clamping while improving drilling quality is an urgent problem to be solved at present.

### Summary

To solve the above problems in the prior art, the present invention proposes a multi-stage adaptive conformal clamping method. The method is implemented based on a drive and feedback module, a conformal module and a locking module. A pressure foot can be pushed out with a small force through the drive and feedback module, thus ensuring that the conformal module can be in effective contact with a curved surface part to be machined; adaptive conformal processing at different points of the curved surface part is achieved through the conformal module; shaping locking is achieved through the locking module; a required clamping force is accurately applied through the drive and feedback module, thus completing first-stage conformal clamping; the contact state of conformal contact points is detected by a detection unit to judge whether multi-stage conformal processing is required; and if required, the locking module and the drive and feedback module will act synchronously to achieve deformation compensation during the first-stage conformal clamping, complete second-stage to multi-stage conformal clamping, and ensure the accuracy of conformal processing and the stability of clamping. The method of the present invention can achieve conformal clamping for different curved surface parts to effectively reduce the deformation amount of the parts, and can compensate for the deformation of the parts caused by clamping through multi-stage adaptive conformal clamping to improve the accuracy and stability of conformal processing and further enhance the machining accuracy. The adaptive conformal clamping method can achieve automated, low-cost, high-accuracy and efficient machining.

To achieve the above purpose, the present invention adopts the following technical solution:
A multi-stage adaptive conformal clamping method is implemented based on a drive and feedback module 1, a conformal module 2, a locking module 3 and a base module 4.

The drive and feedback module 1 is used for enabling a pressure foot to be pushed out with a small force, thus ensuring that the conformal module can be in effective contact with a curved surface part to be machined, and comprises a pneumatic cylinder 101, a connecting plate 102, a drive connecting piece 103, an air hose 104, speed control valves 105, a solenoid valve 106, an electro-pneumatic proportional valve 107, an FRL unit (filter, regulator, lubricator) 108, an air supply 109, a pressure sensor 110 and a signal amplifier 111; the air hose 104 is used for connecting various parts of an air passage and transmitting air pressure, the air supply 109 is connected with a laboratory air supply pipeline and provides a thrust source for the pressure foot, one end of the FRL unit 108 is connected with the air supply 109, the other end of the FRL unit 108 is connected with the electro-pneumatic proportional valve 107 to filter impurities and oil mists in the air and dry the air, the other end of the electro-pneumatic proportional valve 107 is connected with the solenoid valve 106, the electro-pneumatic proportional valve 107 is also connected with a control system to output different clamping forces by receiving a current signal from the control system, an air inlet of the solenoid valve 106 is connected with the electro-pneumatic proportional valve 107, an air outlet of the solenoid valve 106 is respectively connected with a rod end and a cap end of the pneumatic cylinder 101 through two speed control valves 105, the solenoid valve 106 is used for achieving extension and retraction actions of the pressure foot, the extension speed of the pneumatic cylinder 101 is controlled by adjusting the opening degree of the speed control valves 105 to make a clamping process more stable, the pneumatic cylinder 101 serves as an end effector driven by the air passage to complete thrust output of the pressure foot, and the pneumatic cylinder 101 is fixed on a frame unit of a robotic automated drilling end effector through the connecting plate 102 and ensures that the axis of the clamping pneumatic cylinder 101 coincides with the central axis of the frame unit; one end of the pressure sensor 110 is coaxially connected with a piston rod of the pneumatic cylinder 101, and other end is fixed to the drive connecting piece 103; the lower surface of the drive connecting piece 103 is connected with the base module 4 to transmit the thrust of the pneumatic cylinder; and one end of the signal amplifier 111 is connected with the pressure sensor 110 to receive a pressure signal and amplify the signal, and the other end is connected with the control system to ultimately transmit a clamping force to the control system. The control system is also connected with drive units 301 of the locking module 3 to control the locking degree of the drive units 301 on arrays of cylindrical pins 201 in the conformal module 2.

The conformal module 2 is used for achieving adaptive conformal processing at different points of the curved surface part, and comprises cylindrical pins 201, return springs 202 and baffles. Each cylindrical pin 201 is successively divided into three sections A, B and C from the tail end to the head end, the shaft diameter Rc of the section C is the largest, the shaft diameter Rb of the section B is the smallest, and the shaft diameter Ra of the section A is between that of the section C and the section B. The baffles are fixed on the base module 4, arrays of through holes are provided in the baffle, and the through holes are in clearance fit with the cylindrical pins 201; the return springs 202 and the baffles are successively slidably sheathed on the sections B of the cylindrical pins 201, two end faces of each baffle are respectively in contact with one end face of the section A of each cylindrical pin 201 and one end of each return spring 202, and the other end of each return spring 202 is in contact with one end face of the section C of each cylindrical pin 201; and one array of cylindrical pins 201 is formed by the cylindrical pins 201 on the same baffle, the array of cylindrical pins 201 is tangent to the inner wall surface of a reserved assembly space on the base module 4 at the sections C, and the reserved assembly space on the base module 4 provides a guidance for the extension and retraction of the cylindrical pins 201.

The locking module 3 is used for shaping locking of the conformal module 2, and comprises the drive units 301, levers 302, lever pins 303 and pressure blocks 305. The drive units 301 are fixed on the base module 4, and the pressure blocks 305 are arranged in the base module 4, which can come into contact with one side face of each array of cylindrical pins 201 and has a certain clamping space. One end of each lever 302 is connected with each drive unit 301, and the other end is rotatably connected with the base module 4 through each lever pin 303; and one end of each lever 302 is driven by each drive unit 301, and the other end can rotate around each lever pin 303 relative to the base module 4, thereby clamping each pressure block 305;

The multi-stage adaptive conformal clamping method comprises the following specific steps:
S1: Turning on the air supply 109, setting the thrust through the control system, and controlling the opening degree of the electro-pneumatic proportional valve 107 to control the output thrust of the pneumatic cylinder 101 and push out the conformal module 2;
S2: Making the arrays of cylindrical pins 201 in the conformal module 2 come into contact with the curved surface part to be machined, and achieving adaptive conformal processing at different points through the arrays of cylindrical pins 201 according to the curvature characteristics of the surface of the part;
S3: Controlling all the drive units 301 in the locking module 3 to act simultaneously through the control system, and pushing the levers 302 to achieve the locking of the cylindrical pins 201 after conformal processing, thus to complete the shaping locking;
S4: Setting the clamping force through the control system, setting the opening degree of the electro-pneumatic proportional valve 107 to control the output thrust of the pneumatic cylinder 101, measuring the clamping force in real time through the pressure sensor 110, feeding back the clamping force to the control system, and accurately applying the clamping force to the part through the PID control executed by the control system;
S5: The part deforming under pressure, the curvature thereof changing, and some contact points in the arrays of cylindrical pins 201 detaching from the surface of the part;
S6: Judging whether the requirement that all contact points are in contact with the surface of the part is met;
S7: If not, controlling the drive units 301 of the locking module 3 to act simultaneously through the control system, and pushing the levers 302 to achieve a small degree of unlocking of the cylindrical pins 201;
S8: The contact points that have detached from the surface of the part rebounding automatically under the action of the return springs 202 and re-adhering to the surface of the part;
S9: Repeating step S3 to complete a second locking;
S10: Repeating S6 to S9 until the requirement is met; and the robotic automated drilling end effector starting drilling.

Further, the signal measured by the pressure sensor is amplified into a 4-20 mA current signal by the signal amplifier and fed back to the control system.

Further, the effective stroke of the cylindrical pins is 24.5 mm.

Further, each baffle comprises a pin connecting plate 203 and a pin fixing plate 204, the pin connecting plate 203 is provided with circular through holes arranged in an array, the pin fixing plate 204 is provided with gourd-shaped irregular holes, the diameter of the large circular hole of each irregular hole is equal to the diameter of each circular through hole in the pin connecting plate 203, larger than the shaft diameter Ra of the section A of each cylindrical pin 201 and smaller than the shaft diameter Rc of the section C of each cylindrical pin 201, and the diameter of the small circular hole of each irregular hole is larger than the shaft diameter Rb of the section B of each cylindrical pin 201 and smaller than the shaft diameter Ra of the section A of each cylindrical pin 201. The platform dimensions of the pin connecting plate 203 and the pin fixing plate 204 are equal, the clearance fit between the minimum diameter of each through hole and the section B of each cylindrical pin 201 is jointly shown by the pin connecting plate 203 and the pin fixing plate 204 after overlapping completely, and the cylindrical pins 201 can be positioned after the pin connecting plate 203 and the pin fixing plate 204 overlap and are fixed to each other.

More further, the pin connecting plate 203 and the pin fixing plate 204 are connected by screws after overlapping completely, and are placed together in a reserved space of a pin base 405 and a pin fixing block 404 to achieve clamping and fixation.

Further, the locking module 3 also comprises locking blocks 304 and drive unit connecting plates 306, the lever pins 303 pass through the levers 302 and the locking blocks 304 respectively and are in clearance fit with the levers 302 and the locking blocks 304 to provide fulcrums for the rotation of the levers 302; the locking blocks 304 are fixedly connected with the base module 4; and the drive units 301 are fixed on the drive unit connecting plates 306, and then the assembly of each drive unit 301 and each drive unit connecting plate 306 is positioned on the base module 4 through three-sided positioning.

More further, the locking blocks 304 are fixedly connected with the pin fixing block 404. The drive units 301 and the drive unit connecting plates 306 are fixed together on a drive unit rear cover plate 403 and locked by screws.

Further, the base module 4 comprises a base 401, a pressure foot main body 402, the drive unit rear cover plate 403, the pin fixing block 404 and the pin base 405; the base 401 is fixed to the front end of the robotic end effector when in use; the pressure foot main body 402 is fixedly connected with the base 401; the drive unit rear cover plate 403 is fixed on the pressure foot main body 402 to provide an installation position for the drive units 301 in the locking module 3; the pin base 405 is fixed on the pressure foot main body 402; and the pin fixing block 404 is fixedly connected with the pin base 405; and the pin fixing block 404 and the pin base 405 are used for providing a rebound and assembly space for the cylindrical pins 201 in the conformal module 2, and can clamp the pin fixing plates 204 and the pin connecting plates 203.

Further, a normal alignment module 5 comprises a fixing base 501 and a laser generator 502; the fixing base 501 is fixed on the base module 4; and the laser generator 502 is fixed on the fixing base 501 through three-sided positioning.

The present invention has the following beneficial effects: the present invention can achieve accurate control of the clamping force through the drive and feedback module; can achieve conformal clamping of parts with different curvatures through the conformal module, thereby reducing the deformation of the parts; can achieve the consistency between the contact surfaces of the cylindrical pins and the surface shapes of the parts after conformal processing through the locking module, thereby improving the conformal accuracy; and can compensate for the deformation of the parts caused by clamping through multi-stage conformal clamping to improve the accuracy and stability of conformal processing and further enhance the machining accuracy. The drive and feedback module, the conformal module and the locking module of the pressure foot are highly integrated, and the overall structure is compact, which improves the accessibility and universality of the pressure foot, expands the working range of the pressure foot, and ultimately achieves efficient and high-accuracy drilling of curved parts in the fields of aerospace, energy and power, marine engineering, etc.

### Description of Drawings

Fig. 1 is a flow chart of a multi-stage adaptive conformal clamping method applicable to a curved surface structural part of the present invention;
Fig. 2 is an embodiment of a method of the present invention;
Fig. 3 is a schematic diagram of a drive and feedback module in a method of the present invention;
Fig. 4 is a schematic diagram of part of an air passage system of a drive and feedback module in a method of the present invention;
Fig. 5 is a schematic diagram of a main body of a conformal module in a method of the present invention;
Fig. 6 is a partial cross-sectional view of a conformal module of the present invention;
Fig. 7 is a schematic diagram of installation of a locking unit of the present invention;
Fig. 8 is a schematic diagram of installation of a normal alignment module of the present invention.

In the figures: 1-drive and feedback module; 2-conformal module; 3-locking module; 4-base module; 5-normal alignment module; 101-pneumatic cylinder; 102-connecting plate; 103-drive connecting piece; 104-air hose; 105-speed control valve; 106-solenoid valve; 107-electro-pneumatic proportional valve; 108-FRL unit; 109-air supply; 110-pressure sensor; 111-signal amplifier; 201 cylindrical pin; 202 return spring; 203 pin connecting plate; 204 pin fixing plate; 301 drive unit; 302 lever; 303 lever pin; 304 locking block; 305 pressure block; 306 drive unit connecting plate; 401 base; 402 pressure foot main body; 403 drive unit rear cover plate; 404 pin fixing block; 405 pin base; 501 fixing base; and 502 laser generator.

### Detailed Description

To make the purpose, the technical solution and advantages of the embodiments of the present invention more clear, and make those skilled in the art better understand the technical solution of the present invention, the present invention will be further explained below in detail in combination with the drawings. It should be noted that the technical solution claimed by the present invention include but is not limited to the following embodiments. Based on the embodiments in the present invention, all other embodiments obtained by those skilled in the art without contributing creative labor shall belong to the protection scope of the present invention.

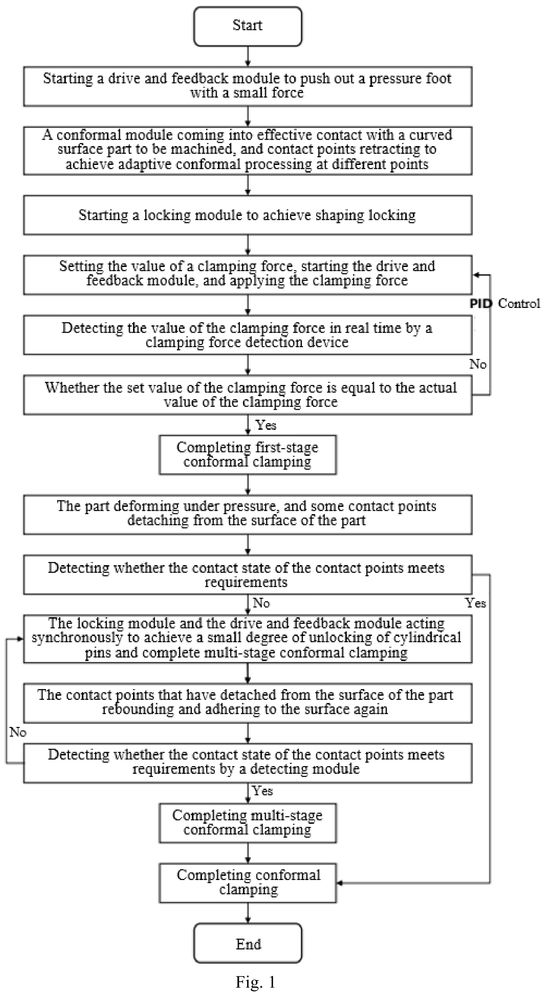

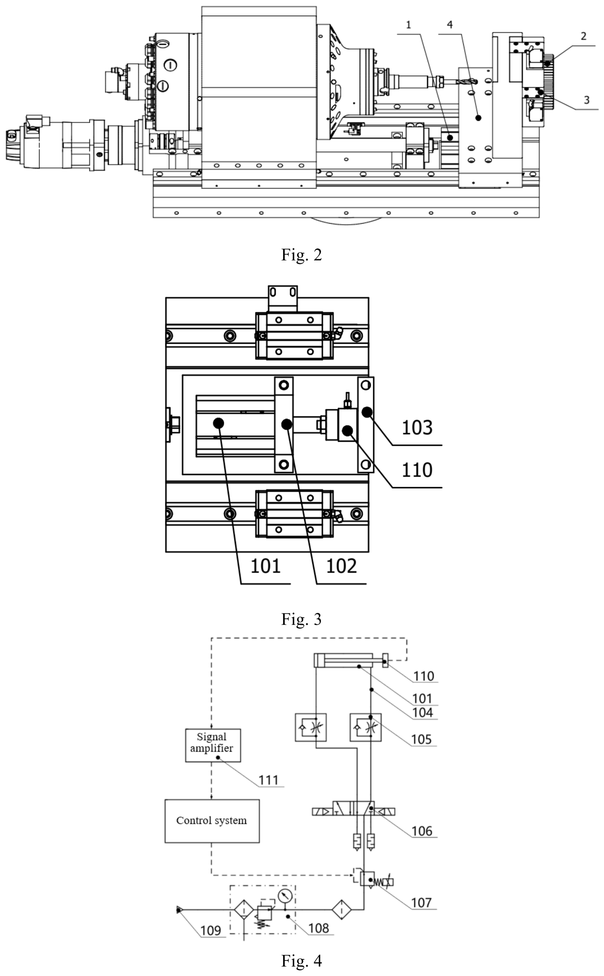

The present embodiment discloses a multi-stage adaptive conformal clamping method. Referring to Fig. 1 and Fig. 2, the method is implemented based on a drive and feedback module 1, a conformal module 2, a locking module 3 and a base module 4.

A pressure foot can be pushed out with a small force through the drive and feedback module 1, thus ensuring that the conformal module 2 can be in effective contact with a curved surface part to be machined; the conformal module 2 comprises cylindrical pins with a matrix layout and capable of extending and retracting freely to achieve adaptive conformal processing at different points of the curved surface part, and a detecting module which can detect the contact state between the cylindrical pins and the part; the cylindrical pins are simultaneously locked by the locking module 3 to ensure the accuracy and stability of conformal processing; a required clamping force is accurately applied through the drive and feedback module 1, thus completing first-stage conformal clamping; the contact state of conformal contact points is detected to judge whether multi-stage conformal processing is required; and if required, the locking module 3 and the drive and feedback module 1 will act synchronously to achieve deformation compensation during the first-stage conformal clamping, complete second-stage to multi-stage conformal clamping, and ensure the accuracy of conformal processing and the stability of clamping. The method can adapt to a curved surface part with a certain curvature, and can reduce the deformation of the part by conducting conformal processing first and then conducting clamping, thus to effectively improve the machining accuracy. The adaptive conformal clamping method can achieve automated, low-cost, high-accuracy and efficient machining.

The conformal module 2 comprises cylindrical pins 201, return springs 202, pin connecting plates 203 and pin fixing plates 204. Each cylindrical pin 201 is successively divided into three sections A, B and C from the tail end to the head end, the shaft diameter Rc of the section C is the largest, the shaft diameter Rb of the section B is the smallest, and the shaft diameter Ra of the section A is between that of the section C and the section B. The pin connecting plates 203 are provided with circular through holes arranged in an array, the pin fixing plates 204 are provided with gourd-shaped irregular holes, the diameter of the large circular hole of each irregular hole is equal to the diameter of each circular through hole in the pin connecting plate 203, larger than the shaft diameter Ra of the section A of each cylindrical pin 201 and smaller than the shaft diameter Rc of the section C of each cylindrical pin 201, and the diameter of the small circular hole of each irregular hole is larger than the shaft diameter Rb of the section B of each cylindrical pin 201 and smaller than the shaft diameter Ra of the section A of each cylindrical pin 201. The platform dimensions of the pin connecting plate 203 and the pin fixing plate 204 are equal, the clearance fit between the minimum diameter of each through hole and the section B of each cylindrical pin 201 is jointly shown by the pin connecting plate 203 and the pin fixing plate 204 after overlapping completely, and the cylindrical pins 201 can be positioned after the pin connecting plate 203 and the pin fixing plate 204 overlap and are fixed to each other by screws. The pin connecting plates 203 and the pin fixing plates 204 are placed together in a reserved space of a pin base 405 and a pin fixing block 404 to achieve clamping and fixation. The return springs 202, the pin connecting plates 203 and the pin fixing plates 204 are successively slidably sheathed on the sections B of the cylindrical pins 201, the outer end face of each pin fixing plate 204 is in contact with one end face of the section A of each cylindrical pin 201, the inner end face of each pin connecting plate 203 is in contact with one end of each return spring 202, and the other end of each return spring 202 is in contact with one end face of the section C of each cylindrical pin 201; and one array of cylindrical pins 201 is formed by the cylindrical pins 201 on the same pin connecting plate 203, the array of cylindrical pins 201 is tangent to the inner wall surface of a reserved assembly space on the pin fixing block 404 of the base module 4 at the sections C, and the reserved assembly space on the pin fixing block 404 provides a guidance for the extension and retraction of the cylindrical pins 201.

The locking module 3 comprises drive units 301, levers 302, lever pins 303, locking blocks 304, pressure blocks 305 and drive unit connecting plates 306. The pressure blocks 305 are arranged in the pin fixing block 404 of the base module 4, which can come into contact with one side face of each array of cylindrical pins 201 and has a certain clamping space. One end of each lever 302 is connected with each drive unit 301, and the other end is rotatably connected with the pin fixing block 404 through each lever pin 303; and one end of each lever 302 is driven by each drive unit 301, and the other end can rotate around each lever pin 303 relative to the pin fixing block 404, thereby clamping each pressure block 305; the locking module 3 also comprises the locking blocks 304 and the drive unit connecting plates 306, the lever pins 303 pass through the levers 302 and the locking blocks 304 respectively and are in clearance fit with the levers 302 and the locking blocks 304 to provide fulcrums for the rotation of the levers 302; the locking blocks 304 are fixedly connected with the pin fixing block 404 of the base module 4; and the drive units 301 are fixed on the drive unit connecting plates 306, and then each drive unit 301 and each drive unit connecting plate 306 are fixed together on a drive unit rear cover plate 403 through three-sided positioning and locked by screws.

The base module 4 comprises a base 401, a pressure foot main body 402, the drive unit rear cover plate 403, the pin fixing block 404 and the pin base 405; the base 401 is fixed to the front end of the robotic end effector when in use; the pressure foot main body 402 is fixedly connected with the base 401; the drive unit rear cover plate 403 is fixed on the pressure foot main body 402 to provide an installation position for the drive units 301 in the locking module 3; the pin base 405 is fixed on the pressure foot main body 402; and the pin fixing block 404 is fixedly connected with the pin base 405; and the pin fixing block 404 and the pin base 405 are used for providing a rebound and assembly space for the cylindrical pins 201 in the conformal module 2, and can clamp the pin fixing plates 204 and the pin connecting plates 203. The drive and feedback module 1 is used for enabling a pressure foot to be pushed out with a small force, thus ensuring that the conformal module can be in effective contact with a curved surface part to be machined, and comprises a pneumatic cylinder 101, a connecting plate 102, a drive connecting piece 103, an air hose 104, speed control valves 105, a solenoid valve 106, an electro-pneumatic proportional valve 107, an FRL unit (filter, regulator, lubricator) 108, an air supply 109, a pressure sensor 110 and a signal amplifier 111; the air hose 104 is used for connecting various parts of an air passage and transmitting air pressure, the air supply 109 is connected with a laboratory air supply pipeline and provides a thrust source for the pressure foot, one end of the FRL unit 108 is connected with the air supply 109, the other end of the FRL unit 108 is connected with the electro-pneumatic proportional valve 107 to filter impurities and oil mists in the air and dry the air, the other end of the electro-pneumatic proportional valve 107 is connected with the solenoid valve 106, the electro-pneumatic proportional valve 107 is also connected with a control system to output different clamping forces by receiving a current signal from the control system, an air inlet of the solenoid valve 106 is connected with the electro-pneumatic proportional valve 107, an air outlet of the solenoid valve 106 is respectively connected with a rod end and a cap end of the pneumatic cylinder 101 through two speed control valves 105, the solenoid valve 106 is used for achieving extension and retraction actions of the pressure foot, the extension speed of the pneumatic cylinder 101 is controlled by adjusting the opening degree of the speed control valves 105 to make a clamping process more stable, the pneumatic cylinder 101 serves as an end effector driven by the air passage to complete thrust output of the pressure foot, and the pneumatic cylinder 101 is fixed on a frame unit of a robotic automated drilling end effector through the connecting plate 102 and ensures that the axis of the clamping pneumatic cylinder 101 coincides with the central axis of the frame unit; one end of the pressure sensor 110 is coaxially connected with a piston rod of the pneumatic cylinder 101, and other end is fixed to the drive connecting piece 103; the lower surface of the drive connecting piece 103 is connected with the base module 4 to transmit the thrust of the pneumatic cylinder; and one end of the signal amplifier 111 is connected with the pressure sensor 110 to receive a pressure signal and amplify the signal, and the other end is connected with the control system to ultimately transmit a clamping force to the control system. The control system is also connected with drive units 301 of the locking module 3 to control the locking degree of the drive units 301 on arrays of cylindrical pins 201 in the conformal module 2.

To achieve the above purposes, the present invention adopts the following technical solution:
S1: Turning on the air supply 109, setting the thrust through the control system, and controlling the opening degree of the electro-pneumatic proportional valve 107 to control the output thrust of the pneumatic cylinder 101 and push out the conformal module 2;
S2: Making the arrays of cylindrical pins 201 in the conformal module 2 come into contact with the curved surface part to be machined, and achieving adaptive conformal processing at different points through the arrays of cylindrical pins 201 according to the curvature characteristics of the surface of the part;
S3: Controlling all the drive units 301 in the locking module 3 to act simultaneously through the control system, and pushing the levers 302 to achieve the locking of the cylindrical pins 201 after conformal processing, thus to complete the shaping locking;
S4: Setting the clamping force through the control system, setting the opening degree of the electro-pneumatic proportional valve 107 to control the output thrust of the pneumatic cylinder 101, measuring the clamping force in real time through the pressure sensor 110, feeding back the clamping force to the control system, and accurately applying the clamping force to the part through the PID control executed by the control system;
S5: The part deforming under pressure, the curvature thereof changing, and some contact points in the arrays of cylindrical pins 201 detaching from the surface of the part;
S6: Judging whether the requirement that all contact points are in contact with the surface of the part is met;
S7: If not, controlling the drive units 301 of the locking module 3 to act simultaneously through the control system, and pushing the levers 302 to achieve a small degree of unlocking of the cylindrical pins 201;
S8: The contact points that have detached from the surface of the part rebounding automatically under the action of the return springs 202 and re-adhering to the surface of the part;
S9: Repeating step S3 to complete a second locking;
S10: Repeating S6 to S9 until the requirement is met; and the robotic automated drilling end effector starting drilling.

Further, referring to Fig. 1 and Fig. 2, after machining is completed according to the multi-stage adaptive conformal clamping method, continuous machining under multi-stage adaptive conformal clamping can be achieved by repeating the above steps.

Further, the signal measured by the pressure sensor 110 is amplified into a 4-20 mA current signal by the signal amplifier 111 and fed back to the control system to be used as an input quantity for the PID control of the control system.

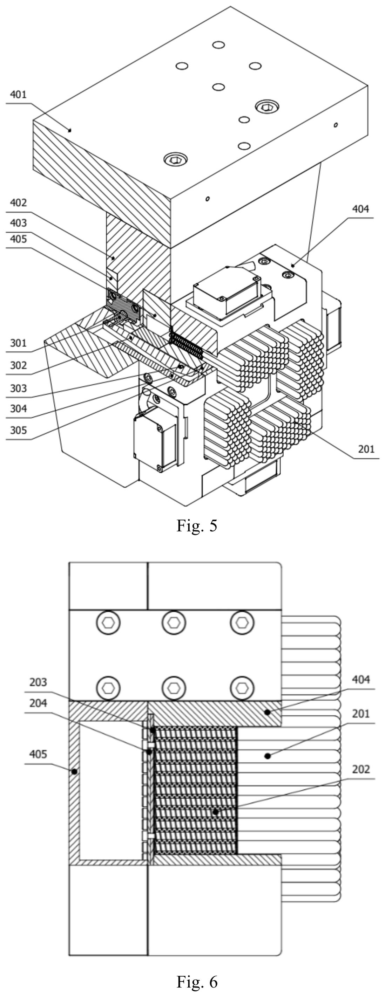

Further, referring to Fig. 5, the effective stroke of the cylindrical pins 301 is 24.5 mm, which can adapt to a part with a certain curvature to be machined; the return springs are compressed in a first-stage conformal process, and the cylindrical pins retract upon coming into contact with the surface of the part; during multi-stage conformal processing, some cylindrical pins that are not in contact with the surface of the part rebound under a spring force, and come into contact with the surface of the part for a second time or for multiple times to compensate for the deformation of the part caused by clamping and improve the accuracy and stability of conformal processing; the contact state between the contact points and the part is detected to judge whether conformal processing is completed by the contact points; and after the conformal processing is completed, the cylindrical pins rebound back to the original positions under the spring force of the return springs.

Further, referring to Fig. 5, a total of four drive units 301 of the locking module 3 are used, and the four drive units 301 need to output simultaneously during locking to ensure the simultaneity of locking and prevent the cylindrical pins in different areas from being disturbed by the locking of other portions; and the levers are driven by locking the pneumatic cylinder, a large frictional force is generated to achieve locking by applying a radial clamping force to the cylindrical pins, and the maximum locking force can be increased or decreased by adjusting the positions of the fulcrums.

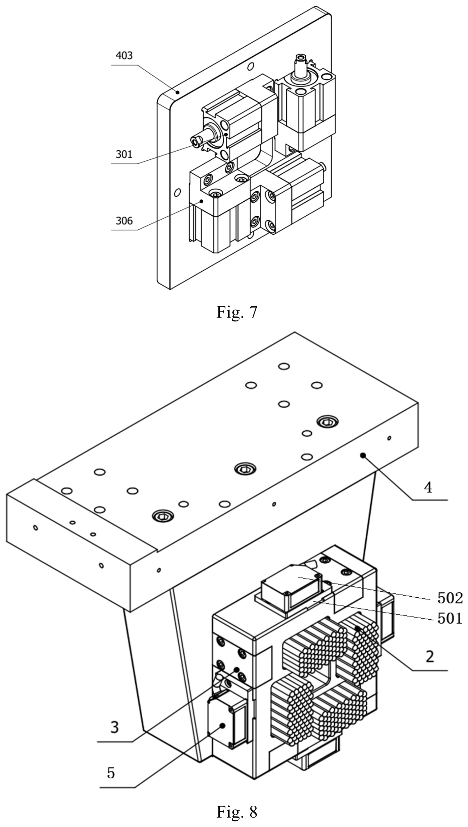

Further, referring to Fig. 8, a normal alignment module 5 comprising a fixing base 501 and a laser generator 502 can be added; the fixing base 501 is positioned on the pin fixing block 404 on three sides and is fixed by screws; and the laser generator 502 is fixed on the fixing base 501 through three-sided positioning. The normal alignment module 5 is used for aligning the perpendicularity between the axis of a tool and the surface of the part before drilling, and the pressure foot is a multi-stage adaptive machining auxiliary clamping device.

The above only describes preferred embodiments of the present invention and is not intended to limit the present invention in any form. Any simple amendment and equivalent change made to the above embodiments according to the technical essence of the present invention shall fall into the protection scope of the present invention.

## Claims

1. A multi-stage adaptive conformal clamping method, wherein the method is implemented based on a drive and feedback module (1), a conformal module (2), a locking module (3) and a base module (4);
the drive and feedback module (1) is used for enabling a pressure foot to be pushed out with a small force, thus ensuring that the conformal module can be in effective contact with a curved surface part to be machined, and comprises a pneumatic cylinder (101), a connecting plate (102), a drive connecting piece (103), an air hose (104), speed control valves (105), a solenoid valve (106), an electro-pneumatic proportional valve (107), an FRL unit (filter, regulator, lubricator) (108), an air supply (109), a pressure sensor (110) and a signal amplifier (111); the air hose (104) is used for connecting various parts of an air passage and transmitting air pressure, the air supply (109) is connected with a laboratory air supply pipeline and provides a thrust source for the pressure foot, one end of the FRL unit (108) is connected with the air supply (109), the other end of the FRL unit (108) is connected with the electro-pneumatic proportional valve (107) to filter impurities and oil mists in the air and dry the air, the other end of the electro-pneumatic proportional valve (107) is connected with the solenoid valve (106), the electro-pneumatic proportional valve (107) is also connected with a control system to output different clamping forces by receiving a current signal from the control system, an air inlet of the solenoid valve (106) is connected with the electro-pneumatic proportional valve (107), an air outlet of the solenoid valve (106) is respectively connected with a rod end and a cap end of the pneumatic cylinder (101) through two speed control valves (105), the solenoid valve (106) is used for achieving extension and retraction actions of the pressure foot, the extension speed of the pneumatic cylinder (101) is controlled by adjusting the opening degree of the speed control valves (105) to make a clamping process more stable, the pneumatic cylinder (101) serves as an end effector driven by the air passage to complete thrust output of the pressure foot, and the pneumatic cylinder (101) is fixed on a frame unit of a robotic automated drilling end effector through the connecting plate (102) and ensures that the axis of the clamping pneumatic cylinder (101) coincides with the central axis of the frame unit; one end of the pressure sensor (110) is coaxially connected with a piston rod of the pneumatic cylinder (101), and other end is fixed to the drive connecting piece (103); the lower surface of the drive connecting piece (103) is connected with the base module (4) to transmit the thrust of the pneumatic cylinder; one end of the signal amplifier (111) is connected with the pressure sensor (110) to receive a pressure signal and amplify the signal, and the other end is connected with the control system to ultimately transmit a clamping force to the control system; and the control system is also connected with drive units (301) of the locking module (3) to control the locking degree of the drive units (301) on arrays of cylindrical pins (201) in the conformal module (2);
the conformal module (2) is used for achieving adaptive conformal processing at different points of the curved surface part, and comprises cylindrical pins (201), return springs (202) and baffles; each cylindrical pin (201) is successively divided into three sections A, B and C from the tail end to the head end, the shaft diameter Rc of the section C is the largest, the shaft diameter Rb of the section B is the smallest, and the shaft diameter Ra of the section A is between that of the section C and the section B; the baffles are fixed on the base module (4), arrays of through holes are provided in the baffle, and the through holes are in clearance fit with the cylindrical pins (201); the return springs (202) and the baffles are successively slidably sheathed on the sections B of the cylindrical pins (201), two end faces of each baffle are respectively in contact with one end face of the section A of each cylindrical pin (201) and one end of each return spring (202), and the other end of each return spring (202) is in contact with one end face of the section C of each cylindrical pin (201); and one array of cylindrical pins (201) is formed by the cylindrical pins (201) on the same baffle, the array of cylindrical pins (201) is tangent to the inner wall surface of a reserved assembly space on the base module (4) at the sections C, and the reserved assembly space on the base module (4) provides a guidance for the extension and retraction of the cylindrical pins (201);
the locking module (3) is used for shaping locking of the conformal module (2), and comprises the drive units (301), levers (302), lever pins (303) and pressure blocks (305); the drive units (301) are fixed on the base module (4), and the pressure blocks (305) are arranged in the base module (4), which can come into contact with one side face of each array of cylindrical pins (201) and has a certain clamping space; one end of each lever (302) is connected with each drive unit (301), and the other end is rotatably connected with the base module (4) through each lever pin (303); and one end of each lever (302) is driven by each drive unit (301), and the other end can rotate around each lever pin (303) relative to the base module (4), thereby clamping each pressure block (305);
the multi-stage adaptive conformal clamping method comprises the following specific steps:
S1: turning on the air supply (109), setting the thrust through the control system, and controlling the opening degree of the electro-pneumatic proportional valve (107) to control the output thrust of the pneumatic cylinder (101) and push out the conformal module (2);
S2: making the arrays of cylindrical pins (201) in the conformal module (2) come into contact with the curved surface part to be machined, and achieving adaptive conformal processing at different points through the arrays of cylindrical pins (201) according to the curvature characteristics of the surface of the part;
S3: controlling all the drive units (301) in the locking module (3) to act simultaneously through the control system, and pushing the levers (302) to achieve the locking of the cylindrical pins (201) after conformal processing, thus to complete the shaping locking;
S4: setting the clamping force through the control system, setting the opening degree of the electro-pneumatic proportional valve (107) to control the output thrust of the pneumatic cylinder (101), measuring the clamping force in real time through the pressure sensor (110), feeding back the clamping force to the control system, and accurately applying the clamping force to the part through the PID control executed by the control system;
S5: the part deforming under pressure, the curvature thereof changing, and some contact points in the arrays of cylindrical pins (201) detaching from the surface of the part;
S6: judging whether the requirement that all contact points are in contact with the surface of the part is met;
S7: if not, controlling the drive units (301) of the locking module (3) to act simultaneously through the control system, and pushing the levers (302) to achieve a small degree of unlocking of the cylindrical pins (201);
S8: the contact points that have detached from the surface of the part rebounding automatically under the action of the return springs (202) and re-adhering to the surface of the part;
S9: repeating step S3 to complete a second locking;
S10: repeating S6 to S9 until the requirement is met; and the robotic automated drilling end effector starting drilling.

2. The multi-stage adaptive conformal clamping method according to claim 1, wherein the signal measured by the pressure sensor (110) is amplified into a 4-20 mA current signal by the signal amplifier (111) and fed back to the control system.

3. The multi-stage adaptive conformal clamping method according to claim 1, wherein the effective stroke of the cylindrical pins (201) is 24.5 mm.

4. The multi-stage adaptive conformal clamping method according to claim 1, wherein each baffle comprises a pin connecting plate (203) and a pin fixing plate (204), the pin connecting plate (203) is provided with circular through holes arranged in an array, the pin fixing plate (204) is provided with gourd-shaped irregular holes, the diameter of the large circular hole of each irregular hole is equal to the diameter of each circular through hole in the pin connecting plate (203), larger than the shaft diameter Ra of the section A of each cylindrical pin (201) and smaller than the shaft diameter Rc of the section C of each cylindrical pin (201), and the diameter of the small circular hole of each irregular hole is larger than the shaft diameter Rb of the section B of each cylindrical pin (201) and smaller than the shaft diameter Ra of the section A of each cylindrical pin (201); and the platform dimensions of the pin connecting plate (203) and the pin fixing plate (204) are equal, the clearance fit between the minimum diameter of each through hole and the section B of each cylindrical pin (201) is jointly shown by the pin connecting plate (203) and the pin fixing plate (204) after overlapping completely, and the cylindrical pins (201) can be positioned after the pin connecting plate (203) and the pin fixing plate (204) overlap and are fixed to each other.

5. The multi-stage adaptive conformal clamping method according to claim 4, wherein the pin connecting plate (203) and the pin fixing plate (204) are connected by screws after overlapping completely, and are placed together in a reserved space of a pin base (405) and a pin fixing block (404) to achieve clamping and fixation.

6. The multi-stage adaptive conformal clamping method according to claim 1, wherein the locking module (3) also comprises locking blocks (304) and drive unit connecting plates (306), the lever pins (303) pass through the levers (302) and the locking blocks (304) respectively and are in clearance fit with the levers (302) and the locking blocks (304) to provide fulcrums for the rotation of the levers (302); the locking blocks (304) are fixedly connected with the base module (4); and the drive units (301) are fixed on the drive unit connecting plates (306), and then the assembly of each drive unit (301) and each drive unit connecting plate (306) is positioned on the base module (4) through three-sided positioning.

7. The multi-stage adaptive conformal clamping method according to claim 6, wherein the locking blocks (304) are fixedly connected with the pin fixing block (404); and the drive units (301) and the drive unit connecting plates (306) are fixed together on a drive unit rear cover plate (403) and locked by screws.

8. The multi-stage adaptive conformal clamping method according to claim 1, wherein the base module (4) comprises a base (401), a pressure foot main body (402), the drive unit rear cover plate (403), the pin fixing block (404) and a pin base (405); the base (401) is fixed to the front end of the robotic end effector when in use; the pressure foot main body (402) is fixedly connected with the base (401); the drive unit rear cover plate (403) is fixed on the pressure foot main body (402) to provide an installation position for the drive units (301) in the locking module (3); the pin base (405) is fixed on the pressure foot main body (402); and the pin fixing block (404) is fixedly connected with the pin base (405); and the pin fixing block (404) and the pin base (405) are used for providing a rebound and assembly space for the cylindrical pins (201) in the conformal module (2), and can clamp the pin fixing plates (204) and the pin connecting plates (203).

9. The multi-stage adaptive conformal clamping method according to claim 1, wherein a normal alignment module (5) comprises a fixing base (501) and a laser generator (502); the fixing base (501) is fixed on the base module (4); and the laser generator (502) is fixed on the fixing base (501) through three-sided positioning.
